# EUROPEAN PATENT APPLICATION

(11) **EP 3 360 922 A1**
(43) Date of publication of application: **15.08.2018**
(21) Application number: 17166612.6
(22) Date of filing: 13.04.2017
(51) Int. Cl.: C08J 9/14

(54) **COMPOSITIONS AND USES OF CIS-1,1,1,4,4,4-HEXAFLUORO-2-BUTENE**

(30) Priority: 13.02.2017 US 201715431114
(71) Applicant: Honeywell International Inc., Morris Plains NJ 07950 (US)
(72) Inventor: Hulse, Ryan, Buffalo, NY 14210 (US); Zyhowski, Gary John, Buffalo, NY 14210 (US); Hofman, Bjorn, Buffalo, NY 14210 (US); Knopeck, Gary M, Buffalo, NY 14210 (US); Basu, Rajat Subhra, Buffalo, NY 14210 (US); Singh, Rajiv Ratna, Buffalo, NY 14210 (US); Williams, David John, Buffalo, NY 14210 (US); Williams, Richard Gerard, Buffalo, NY 14210 (US)
(74) Representative: Crooks, Elizabeth Caroline

(57) **Abstract**

This invention relates to thermoset, thermally insulating panel and spray foams having desirable and unexpectedly low thermal conductivities, and to compositions, methods and systems which use and/or are used to make such foams. In particular is dislosed a method comprising: (a) providing a thermosetting foam forming component and a blowing agent for forming predominantly closed cells in the foam, wherein the blowing agent comprises cis-1,1,1,4,4,4-hexafluoro-2-butene (HFO-1336mzzm(Z)) and water, with (i) the HFO-1336mzzm(Z) and water in the blowing agent together comprising at least about 50% by weight of the total of all components in the blowing agent, and (ii) the weight ratio of HFO-1336mzzm(Z) to water in the blowing agent being from about 90:10 to less than 98:2, and (b) forming a foam from said provided foamable composition.

## Description

### CROSS-REFERENCE TO RELATED APPLICATION

This application is a continuation-in-part of U.S. Application No. 15/209,306, filed July 13, 2016, which in turn is a continuation of U.S. Application No. 12/968,506, filed December 15, 2010, which in turn claims benefit of U.S. Provisional Patent Application Serial No. 61/287,033 filed December 16, 2009. The disclosure of each application mentioned in this paragraph is hereby incorporated herein by reference.

### FIELD OF THE INVENTION

This invention relates to thermal insulating foams for panel, pour-in-place and spray foam applications and to compositions, methods and systems which use and/or are used to make such foams.

### BACKGROUND OF THE INVENTION

Foams in general have numerous and widely varying applications and can be formed from a wide variety of materials. For example, the material which forms the matrix, or solid portion, of the foam can be a thermoplastic or a thermosetting material, and each of such materials can be used and has been used in a wide variety of applications. One such application is to provide thermal insulation.

One desirable property for thermal insulating applications is to provide the foam with a resistance to the flow of heat that is as high as possible. This property is frequently measured in terms of the thermal conductivity of the foam, and the resistance to the flow of heat generally increases as the thermal conductivity of the foam decreases.

It has been known that certain thermosetting foams can be formed using as one component of the blowing agent cis-1,1,1,4,4,4-hexafluoro-2-butene (HFO-1336mzzm(Z) or cis-1336mzzm). For example, Japanese laid open patent application H-179043 discloses the use of cis-1336mzzm and indicates that a variety of co-blowing agents can be used in association with the cis-1336mzzm. However, H-179043 does not disclose the use of this material, either alone or in combination, for use in connection with the formation of panel foams or spray foams, nor does it indicate or suggest that a highly desirable low thermal conductivity can be achieved by judicious selection of the amount of cis-1336mzzm to be used in combination with a specific amount or type of co-blowing agent.

### SUMMARY OF THE INVENTION

This invention relates to thermoset, thermal insulating panel and spray foams having desirable and unexpectedly low thermal conductivity, and to compositions, method and systems which use and/or are used to make such foams. As used herein, the term "panel" is meant to mean foam insulation produced by a continuous or discontinuous process in the form of boards or slabs with a facer material, such as but not limited to multilayer film, aluminum foil, roofing felt, metal, wood, gypsum wall board, and the like attached to opposite sides to produce a sandwich-like configuration.

One aspect of the invention provides a method of making thermoset, thermal insulation foams, and in particular insulating panel or spray foams, comprising: (a) providing foamable composition comprising a thermosetting foam forming component, preferably a polyurethane foam forming component, and a blowing agent for forming predominantly closed cells in the foam, wherein the blowing agent comprises: (i) cis-1,1,1,4,4,4-hexafluoro-2-butene (HFO-1336mzzm(Z)) and water, with the HFO-1336mzzm(Z) and water in the blowing agent together comprising at least about 50% by weight of the total of all components in the blowing agent, preferably at least about 70% by weight, more preferable from about 80% to about 100% by weight; and (ii) the weight ratio of HFO-1336mzzm(Z) to water in the blowing agent is from about 90:10 to less than 98:2, preferably from about 90:10 to about 97:3 and even more preferably from about 96:4 to about 97:3; and (b) forming foam, preferably panel foam or spray foam, from said provided foamable composition.

The term "polyurethane foam" used herein means a rigid or semi-rigid cellular plastic insulation with a predominately closed cell structure based on polyurethane. This term "polyurethane foam" is understood to include polyisocyanurate foam, which is understood to mean a rigid or semi-rigid cellular plastic insulation with a substantially closed cell structure based on polyisocyanurate.

As applicants use the term herein, "about" is intended to encompass ordinary variability in the measurement of the indicated quantity.

Applicants have unexpectedly found that when the HFO-1336mzzm(Z) and water are present in the blowing agent in the amounts and in the relative ratios described herein, particularly and preferably when used in panel foam formulations or spray foam formulations, a highly desirable but unexpectedly high resistance to heat flow occurs. As those skilled in the art will appreciate, reductions in thermal conductivity of the magnitude achieved according to the present invention are extremely valuable, difficult to achieve, and not predictable, especially in connection with panel foam and spray foam.

In preferred embodiments, the invention provides a method of making thermoset, thermal insulation panel foams, comprising: (a) providing foamable composition comprising a thermosetting, polyurethane foam forming component, and a blowing agent for forming predominantly closed cells in the foam, wherein the blowing agent comprises: (i) cis-1,1,1,4,4,4-hexafluoro-2-butene (HFO-1336mzzm(Z)) and water, with the HFO-1336mzzm(Z) and water in the blowing agent together comprising at least about 70% by weight of the combination of HFO-1336mzzm(Z) and water based on all the components in the blowing agent, and the weight ratio of said HFO-1336mzzm(Z) to said water in the blowing agent is from about 90:10 to less than 98:2, more preferably from about 90:10 to about 97:3, and even more preferably from about 96:4 to about 97:3; and forming said foamable composition into a panel.

In preferred embodiments, the invention provides a method of making thermoset, thermal insulation spray foams, comprising: (a) providing foamable composition comprising a thermosetting, polyurethane foam forming component, and a blowing agent for forming predominantly closed cells in the foam, wherein the blowing agent comprises: (i) cis-1,1,1,4,4,4-hexafluoro-2-butene (HFO-1336mzzm(Z)) and water, with the HFO-1336mzzm(Z) and water in the blowing agent together comprising blowing agent comprises at least about 70% by weight of the combination of Z-1336mzzmHFO-1336mzzm(Z) and water based on all the components in the blowing agent, and the weight ratio of said Z-1336mzzmHFO-1336mzzm(Z) to said water in the blowing agent is from about 90:10 to less than 98:2, more preferably from about 90:10 to about 97:3, and even more preferably from about 96:4 to about 97:3; and spaying said foamable composition into a spray-formed foam.

In preferred embodiments, the invention provides a method of making thermoset, thermal insulation pour-in-place panel foams, comprising: (a) providing foamable composition comprising a thermosetting, polyurethane foam forming component, and a blowing agent for forming predominantly closed cells in the foam, wherein the blowing agent comprises: (i) cis-1,1,1,4,4,4-hexafluoro-2-butene (HFO-1336mzzm(Z)) and water, with the HFO-1336mzzm(Z) and water in the blowing agent together comprising blowing agent comprises at least about 70% by weight of the combination of Z-1336mzzmHFO-1336mzzm(Z) and water based on all the components in the blowing agent, and the weight ratio of said Z-1336mzzmHFO-1336mzzm(Z) to said water in the blowing agent is from about 90:10 to less than 98:2, more preferably from about 90:10 to about 97:3, and even more preferably from about 96:4 to about 97:3; and pouring said foamable composition into a poured-in-place foam.

In preferred embodiments, the blowing agent in each of the above-noted preferred methods comprises at least about 80% by weight of the combination of HFO-1336mzzm(Z) and water based on all the components in the blowing agent, and the weight ratio of said HFO-1336mzzm(Z) to said water in the blowing agent is from about 90:10 to less than 98:2, preferably from about 90:10 to about 97:3, and even more preferably from about 96:4 to about 97:3.

In preferred embodiments, the blowing agent in each of the above-noted preferred methods comprises at least about 90% by weight of the combination of HFO-1336mzzm(Z) and water based on all the components in the blowing agent, and the weight ratio of said HFO-1336mzzm(Z) to said water in the blowing agent is from about 90:10 to less than 98:2, preferably from about 90:10 to about 97:3 and even more preferably from about 96:4 to about 97:3.

In preferred embodiments, the blowing agent in each of the above-noted preferred methods comprises at least about 95% by weight of the combination of HFO-1336mzzm(Z) and water based on all the components in the blowing agent, and the weight ratio of said HFO-1336mzzm(Z) to said water in the blowing agent is from about 90:10 to less than 98:2, and preferably from about 90:10 to about 97:3, and even more preferably from about 96:4 to about 97:3.

In preferred embodiments, the blowing agent in each of the above-noted preferred methods consists essentially of a combination of HFO-1336mzzm(Z) and water, or consists of a combination of HFO-1336mzzm(Z) and water, and the weight ratio of said HFO-1336mzzm(Z) to said water in the blowing agent is from about 90:10 to less than 98:2, preferably from 90:10 to about 97:3, and even more preferably from about 96:4 to about 97:3.

In one preferred embodiment of the present invention, the step of forming said foam comprises reacting a thermosetting foam forming component, preferably a polyurethane foam forming component, to form a thermoset matrix of polymeric material, preferably a matrix of polyurethane, and predominantly closed cells in the polymeric matrix. In such embodiments, the reacting step comprises reacting the water of said blowing agent with at least a portion of said thermosetting foam forming component, preferably with at least a portion of said polyurethane foam forming component, to produce gaseous CO₂ such that said cells contain a gas in which said HFO-1336mzzm(Z) and said CO₂ together comprise at least about 50 weight percent, and even more preferably at least about 75% by weight of the gaseous components in the cell and wherein the mole ratio of said HFO-1336mzzm(Z) to said CO₂ is from about 50:50 to about 80:20, and even more preferably from about 75:25 to about 60:40.

In one preferred embodiment of the present invention, the step of forming said foam comprises reacting a thermosetting, polyurethane foam forming component, to form a thermoset polyurethane matrix and predominantly closed cells in the polymeric matrix. In such embodiments, the reacting step comprises reacting the water of said blowing agent with at least a portion of said thermosetting polyurethane foam forming component, to produce gaseous CO₂ such that said cells contain a gas in which said HFO-1336mzzm(Z) and said CO₂ together comprise at least about 75 weight percent of the gaseous components in the cell and wherein the mole ratio of said HFO-1336mzzm(Z) to said CO₂ is from about 50:50 to about 80:20, and even more preferably from about 75:25 to about 60:40. In one preferred embodiment of the present invention, the step of forming said foam comprises reacting a thermosetting, polyurethane foam forming component, to form a thermoset polyurethane matrix and predominantly closed cells in the polymeric matrix. In such embodiments, the reacting step comprises reacting the water of said blowing agent with at least a portion of said thermosetting polyurethane foam forming component, to produce gaseous CO₂ such that said cells contain a gas in which said HFO-1336mzzm(Z) and said CO₂ together comprise at least about 95 weight percent of the gaseous components in the cell and wherein the mole ratio of said HFO-1336mzzm(Z) to said CO₂ is from about 50:50 to about 80:20, and even more preferably from about 75:25 to about 60:40.

In one preferred embodiment of the present invention, the step of forming said foam comprises reacting a thermosetting, polyurethane foam forming component, to form a thermoset polyurethane matrix and predominantly closed cells in the polymeric matrix. In such embodiments, the reacting step comprises reacting the water of said blowing agent with at least a portion of said thermosetting polyurethane foam forming component, to produce gaseous CO2 such that said cells contain a gas in which said HFO-1336mzzm(Z) and said CO2 together comprise about 100% weight percent of the gaseous components in the cell and wherein the mole ratio of said HFO-1336mzzm(Z) to said CO2 is from about 50:50 to about 80:20, and even more preferably from about 75:25 to about 60:40.

Another aspect of the invention provides thermoset, thermal insulating foam, preferably formed as a panel or by spray foaming, comprising: (a) a thermoset matrix of polymeric material, preferably polyurethane, and predominantly closed cells in said matrix; and (b) gaseous blowing agent contained in said cells, wherein the gaseous material in said closed cells comprises HFO-1336mzzm(Z) and CO2 and wherein said HFO-1336mzzm(Z) and CO2 together comprise at least about 50 weight percent, and even more preferably at least about 75% by weight of the gaseous components in the cell and wherein the mole ratio of said HFO-1336mzzm(Z) to said CO2 is from about 50:50 to about 80:20, and even more preferably from about 75:25 to about 60:40 and wherein said foam has an initial k-factor (also called lambda) as measured at 10C of not greater than 20 mW/mK.

Another aspect of the invention provides thermoset, thermal insulating foam formed as a panel foam comprising: (a) a thermoset matrix of polyurethane and open predominantly closed cells in said matrix; and (b) gaseous blowing agent contained in said cells, wherein the gaseous material in said closed cells comprises HFO-1336mzzm(Z) and CO2 and wherein said HFO-1336mzzm(Z) and CO2 together comprise at least about 75% by weight of the gaseous components in the cell and wherein the mole ratio of said HFO-1336mzzm(Z) to said CO2 is from about 50:50 to about 80:20, and even more preferably from about 75:25 to about 60-:40 and wherein said foam has an initial k-factor (also called lambda) as measured at 10C of not greater than 20 mW/mK.

Another aspect of the invention provides thermoset, thermal insulating foam formed as a spray foam comprising: (a) a thermoset matrix of polyurethane and open predominantly closed cells in said matrix; and (b) gaseous blowing agent contained in said cells, wherein the gaseous material in said closed cells comprises HFO-1336mzzm(Z) and CO2 and wherein said HFO-1336mzzm(Z) and CO2 together comprise at least about 75% by weight of the gaseous components in the cell and wherein the mole ratio of said HFO-1336mzzm(Z) to said CO2 is from about 50:50 to about 80:20, and even more preferably from about 75:25 to about 60-:40 and wherein said foam has an initial k-factor (also called lambda) as measured at 10C of not greater than 20 mW/mK.

Another aspect of the invention provides thermoset, thermal insulating foam formed as a pour-in-place foam comprising: (a) a thermoset matrix of polyurethane and open predominantly closed cells in said matrix; and (b) gaseous blowing agent contained in said cells, wherein the gaseous material in said closed cells comprises HFO-1336mzzm(Z) and CO2 and wherein said HFO-1336mzzm(Z) and CO2 together comprise at least about 75% by weight of the gaseous components in the cell and wherein the mole ratio of said HFO-1336mzzm(Z) to said CO2 is from about 50:50 to about 80:20, and even more preferably from about 75:25 to about 60-:40 and wherein said foam has an initial k-factor (also called lambda) as measured at 10C of not greater than 20 mW/mK.

Another aspect of the invention provides thermoset, thermal insulating foam formed as a panel foam comprising: (a) a thermoset matrix of polyurethane and open predominantly closed cells in said matrix; and (b) gaseous blowing agent contained in said cells, wherein the gaseous material in said closed cells comprises HFO-1336mzzm(Z) and CO2 and wherein said HFO-1336mzzm(Z) and CO2 together comprise at least about 95% by weight of the gaseous components in the cell and wherein the mole ratio of said HFO-1336mzzm(Z) to said CO2 is from about 50:50 to about 80:20, and even more preferably from about 75:25 to about 60-:40 and wherein said foam has an initial k-factor (also called lambda) as measured at 10C of not greater than 20 mW/mK.

Another aspect of the invention provides thermoset, thermal insulating foam formed as a spray foam comprising: (a) a thermoset matrix of polyurethane and open predominantly closed cells in said matrix; and (b) gaseous blowing agent contained in said cells, wherein the gaseous material in said closed cells comprises HFO-1336mzzm(Z) and CO2 and wherein said HFO-1336mzzm(Z) and CO2 together comprise at least about 95% by weight of the gaseous components in the cell and wherein the mole ratio of said HFO-1336mzzm(Z) to said CO2 is from about 50:50 to about 80:20, and even more preferably from about 75:25 to about 60-:40 and wherein said foam has an initial k-factor (also called lambda) as measured at 10C of not greater than 20 mW/mK.

Another aspect of the invention provides thermoset, thermal insulating foam formed as a pour-in-place foam comprising: (a) a thermoset matrix of polyurethane and open predominantly closed cells in said matrix; and (b) gaseous blowing agent contained in said cells, wherein the gaseous material in said closed cells comprises HFO-1336mzzm(Z) and CO2 and wherein said HFO-1336mzzm(Z) and CO2 together comprise at least about 95% by weight of the gaseous components in the cell and wherein the mole ratio of said HFO-1336mzzm(Z) to said CO2 is from about 50:50 to about 80:20, and even more preferably from about 75:25 to about 60-:40 and wherein said foam has an initial k-factor (also called lambda) as measured at 10C of not greater than 20 mW/mK.

Another aspect of the invention provides thermoset, thermal insulating foam, preferably formed as a panel or by spray foaming, comprising: (a) a thermoset matrix of polymeric material, preferably polyurethane, and predominantly closed cells in said matrix; and (b) gaseous blowing agent contained in said cells, wherein the gaseous material in said closed cells comprises HFO-1336mzzm(Z) and CO₂ and wherein said HFO-1336mzzm(Z) together comprise at least about 50 weight percent, and even more preferably at least about 75% by weight of the gaseous components in the cell and wherein the mole ratio of said HFO-1336mzzm(Z) to said CO2 is from about 50:50 to about 80:20, and even more preferably from about 75:25 to about 60:40 and wherein said foam has a delta lambda as defined herein of not less than about 4.5 mW/mK.

Another aspect of the invention provides thermoset, thermal insulating foam formed as a panel foaming, comprising: (a) a thermoset matrix of polyurethane and predominantly closed cells in said matrix; and (b) gaseous blowing agent contained in said cells, wherein the gaseous material in said closed cells comprise HFO-1336mzzm(Z) and CO₂ and wherein said HFO-1336mzzm(Z) and CO₂ together comprise at least about 75% by weight of the gaseous components in the cell and wherein the mole ratio of said HFO-1336mzzm(Z) to said CO2 is from about 50:50 to about 80:20, and even more preferably from about 75:25 to about 60:40 and wherein said foam has a delta lambda as defined herein of not less than about 4.5 mW/mK.

Another aspect of the invention provides thermoset, thermal insulating foam formed as a spray foam comprising: (a) a thermoset matrix of polyurethane and predominantly closed cells in said matrix; and (b) gaseous blowing agent contained in said cells, wherein the gaseous material in said closed cells comprise HFO-1336mzzm(Z) and CO₂ and wherein said HFO-1336mzzm(Z) and CO₂ together comprise at least about 75% by weight of the gaseous components in the cell and wherein the mole ratio of said HFO-1336mzzm(Z) to said CO2 is from about 50:50 to about 80:20, and even more preferably from about 75:25 to about 60:40 and wherein said foam has a delta lambda as defined herein of not less than about 4.5 mW/mK.

Another aspect of the invention provides thermoset, thermal insulating foam formed as a pour-in-place foam comprising: (a) a thermoset matrix of polyurethane and predominantly closed cells in said matrix; and (b) gaseous blowing agent contained in said cells, wherein the gaseous material in said closed cells comprise HFO-1336mzzm(Z) and CO2 and wherein said HFO-1336mzzm(Z) and CO2 together comprise at least about 75% by weight of the gaseous components in the cell and wherein the mole ratio of said HFO-1336mzzm(Z) to said CO2 is from about 50:50 to about 80:20, and even more preferably from about 75:25 to about 60:40 and wherein said foam has a delta lambda as defined herein of not less than about 4.5 mW/mK.

Another aspect of the invention provides thermoset, thermal insulating foam formed as a panel foaming, comprising: (a) a thermoset matrix of polyurethane and predominantly closed cells in said matrix; and (b) gaseous blowing agent contained in said cells, wherein the gaseous material in said closed cells comprise HFO-1336mzzm(Z) and CO2 and wherein said HFO-1336mzzm(Z) and CO2 together comprise at least about 95% by weight of the gaseous components in the cell and wherein the mole ratio of said HFO-1336mzzm(Z) to said CO2 is from about 50:50 to about 80:20, and even more preferably from about 75:25 to about 60:40 and wherein said foam has a delta lambda as defined herein of not less than about 4.5 mW/mK.

Another aspect of the invention provides thermoset, thermal insulating foam formed as a spray foam comprising: (a) a thermoset matrix of polyurethane and predominantly closed cells in said matrix; and (b) gaseous blowing agent contained in said cells, wherein the gaseous material in said closed cells comprise HFO-1336mzzm(Z) and CO2 and wherein said HFO-1336mzzm(Z) and CO2 together comprise at least about 95% by weight of the gaseous components in the cell and wherein the mole ratio of said HFO-1336mzzm(Z) to said CO2 is from about 50:50 to about 80:20, and even more preferably from about 75:25 to about 60:40 and wherein said foam has a delta lambda as defined herein of not less than about 4.5 mW/mK.

Another aspect of the invention provides thermoset, thermal insulating foam formed as a pour-in-place foam comprising: (a) a thermoset matrix of polyurethane and predominantly closed cells in said matrix; and (b) gaseous blowing agent contained in said cells, wherein the gaseous material in said closed cells comprise HFO-1336mzzm(Z) and CO₂ and wherein said HFO-1336mzzm(Z) and CO₂ together comprise at least about 75% by weight of the gaseous components in the cell and wherein the mole ratio of said HFO-1336mzzm(Z) to said CO2 is from about 50:50 to about 80:20, and even more preferably from about 75:25 to about 60:40 and wherein said foam has a delta lambda as defined herein of not less than about 4.5 mW/mK.

It should be noted that it would be common and expected for a product designated as HFO-1336mzzm(Z) to include a minor percentage, for example about 10 ppm up to about 2 wt. % of other components, including particularly HFO-1336mzzm(E). When used herein, the term "consisting essentially of Z-HFO-1336mzzm" is intended to generally include such compositions. The terms "consist of" and "consisting of" as used herein, do not include such other amount of components but could include trace or contamination levels of other components.

Another aspect of the invention provides thermoset, thermal insulating foam formed as a panel foaming, comprising: (a) a thermoset matrix of polyurethane and predominantly closed cells in said matrix; and (b) gaseous blowing agent contained in said cells, wherein the gaseous material in said closed cells consists of HFO-1336mzzm(Z) and CO₂ and wherein the mole ratio of said HFO-1336mzzm(Z) to said CO2 is from about 50:50 to about 80:20, and even more preferably from about 75:25 to about 60:40 and wherein said foam has a delta lambda as defined herein of not less than about 4.5 mW/mK.

Another aspect of the invention provides thermoset, thermal insulating foam formed as a spray foam comprising: (a) a thermoset matrix of polyurethane and predominantly closed cells in said matrix; and (b) gaseous blowing agent contained in said cells, wherein the gaseous material in said closed cells consist of HFO-1336mzzm(Z) and CO₂ and wherein the mole ratio of said HFO-1336mzzm(Z) to said CO2 is from about 50:50 to about 80:20, and even more preferably from about 75:25 to about 60:40 and wherein said foam has a delta lambda as defined herein of not less than about 4.5 mW/mK.

Another aspect of the invention provides thermoset, thermal insulating foam formed as a pour-in-place foam comprising: (a) a thermoset matrix of polyurethane and predominantly closed cells in said matrix; and (b) gaseous blowing agent contained in said cells, wherein the gaseous material in said closed cells consists of HFO-1336mzzm(Z) and CO₂ and wherein said HFO-1336mzzm(Z) and CO₂ l and wherein the mole ratio of said HFO-1336mzzm(Z) to said CO2 is from about 50:50 to about 80:20, and even more preferably from about 75:25 to about 60:40 and wherein said foam has a delta lambda as defined herein of not less than about 4.5 mW/mK.

All of the embodiments of the invention described herein may, if desired, be obtained in a substantially purified form, such that these embodiments preferably consist of only the actual components designated, other than minor (e.g., ppm) impurities.

One embodiment of the present invention provides foamable compositions. As is known to those skilled in the art, foamable compositions generally include one or more components capable of forming foam. As used herein, the term "foamable composition" refers to a combination of components which are capable of forming a foam structure, preferably a generally cellular foam structure.

### DESCRIPTION OF THE DRAWINGS

Figure 1 is a plot of initial lambda as a function of weight percent water in the blowing agent as reported in Examples 1, 2 and C1 - C3.
Figure 2 is a plot of aged lambda as a function of weight percent water in the blowing agent as reported in Examples 1, 2 and C1 - C3.
Figure 3 is a plot of initial lambda as a function of weight percent water in the blowing agent as reported in Examples 3, 4 and C4 - C6.
Figure 4 is a plot of Delta lambda as a function of weight percent water in the blowing agent as reported in Examples 3, 4 and C4 - C6.
Figure 5 is a plot of aged lambda as a function of weight percent water in the blowing agent as reported in Examples 5, 6 and C7 - C9.
Figure 6 is a plot of aged lambda as a function of weight percent water in the blowing agent as reported in Examples 7, 8 and C10 - C12.

### DETAILED DESCRIPTION OF PREFERRED EMBODIMENTS

One aspect of the present invention relates to thermal insulating foams, preferably and particularly thermal insulating panel foams, thermal insulating pour-in-place foams and thermal insulating spray foams, that have uses in a wide variety of insulation applications. The foams of the present invention formed from spray foam formulations and by spray foaming and/or frothing are preferably used in applications which include roofing and roofing panels, envelope insulation, building envelope insulation, pipe insulation, tank insulation, cryogenic gas container and vessel insulation, including LNG, LPG, nitrogen and other cryogenic gas shipping tanks and transporters. The foams of the present invention formed from pour-in-place foam formulations and by pour-in-place foaming are preferably used in applications which include appliance foams, such as refrigerators, freezers and the like, and pipe insulation. The foams of the present invention formed from panel foam formulations and by panel forming operations are preferably used in applications which include roofing and roofing panels, envelope insulation, building envelope insulation, refrigerated transport insulation, pipe insulation, tank insulation, cryogenic gas container and vessel insulation, including LNG, LPG, nitrogen and other cryogenic gas shipping tanks and transporters.

A critical factor in the large-scale commercial acceptance of such foams, including rigid polyurethane applications, is the insulating value of the foam, typically as measured by thermal conductivity (k-factor, lambda). The blowing agent used in the formation of such foams is important in this regard since either the blowing agent component itself (as in the case of physical blowing agent) or the gaseous reaction product formed from the blowing agent component (in the case of chemical blowing agent) is typically encapsulated or entrained in the closed cell structure of the foam, preferably the rigid foam, and are the major contributor(s) to the thermal conductivity properties of foam, particularly to the rigid urethane foams.

The k-factor of a foam is defined as the rate of transfer of heat energy by conduction through a unit area of a unit thickness of homogenous material in unit time where there is a specific temperature differential perpendicularly across the two surfaces of the material. The utility of closed-cell foams, including particularly polyurethane-type foams is based, in large part, on their thermal insulation properties. Applicants have found that the k-factor of thermoset panel foams and spray foams can be reduced to an unexpectedly low level by the use of a combination of HFO-1336mzzm(Z), which acts as a physical blowing agent, and water, which acts as a chemical blowing agent, in the amounts as a percentage of the total blowing agent components, and in the relative HFO-1336mzzm(Z):water (and HFO-1336mzzm(Z):CO₂) amounts as specified herein. As is known, thermosetting foams, and particularly and preferably rigid polyurethane and polyisocyanurate foams, can be formed by reacting a polyisocyanate with a polyol in the presence of a blowing agent, and preferably in the presence of catalyst(s), surfactant(s) and optionally other ingredients. Chemical blowing agents, including water, participate chemically in the foam-forming reaction and generate CO₂ or other gases in, with the case of water, an approximate 1:1 mole ratio. Heat generated when the polyisocyanate reacts with the polyol volatilizes the physical blowing agent contained in the liquid mixture, and together with CO₂ formed by the chemical blowing agent, thereby forms bubbles therein. As the polymerization reaction proceeds, the liquid mixture becomes a cellular solid, entrapping the physical blowing agent and the formed CO₂ in the cells of the foam.

The panel foams of the present invention preferably have an initial k-factor (also sometimes referred to herein as "initial lambda") as measured at 10°C of not greater than 20.5 mW/mK, and even more preferably of not greater than about 20.4 mW/mK, and even more preferably of not greater than about 20.35 mW/mK. Applicants have found that such low k-factors for panel foams can be achieved by utilizing the combination of HFO-1336mzzm(Z) and water in the blowing agent in the amounts and relative ratios specified herein, but in particular where the weight ratio of said HFO-1336mzzm(Z) to said water in the blowing agent is from about 90:10 to about 97:3, and even more preferably from about 96:4 to about 97:3.

The spray foams of the present invention preferably have an initial k-factor (also sometimes referred to herein as "initial lambda") as measured at 10°C of not greater than 20 mW/mK, and even more preferably of not greater than about 19.9 mW/mK, and even more preferably of not greater than about 19.7 mW/mK. In certain highly preferred embodiments, the initial k-factor as measured at 10°C is not greater than about 19 mW/mK, more preferably not greater than about 18.5 mW/mK, and even more preferably of about 18 mW/mK or less. The spray foams of the present invention preferably have an initial k-factor (also sometimes referred to herein as "initial lambda") as measured at 10°C of not greater than 20 mW/mK, and even more preferably of not greater than about 19.9 mW/mK, and even more preferably of not greater than about 19.7 mW/mK. In certain highly preferred embodiments, the k-factor of the foam as measured at 10C after being aged for 21 days at room temperature is less than 21.6 mW/mK, more preferably less than about 21.0mW/mK. Applicants have found that such low k-factors for panel foams can be achieved by utilizing the combination of HFO-1336mzzm(Z) and water in the blowing agent in the amounts and relative ratios specified herein, but in particular where the weight ratio of said HFO-1336mzzm(Z) to said water in the blowing agent is from about 95:5 to less than 98:2, and even more preferably from about 96:4 to about 97:3.

It is generally preferred that the blowing agent of the present invention comprises at least about 70% by weight of the combination of HFO-1336mzzm(Z) and water, more preferably at least about 80% by weight, and even more preferably at least about 95% by weight. To the extent other co-blowing agents are included in the blowing agent, it is contemplated that those skilled in the art will be able, in view of the teachings contained herein, to select the specific co-blowing agent(s) and the amount(s) to achieve the result desired for any particular application.

By way of example, possible co-blowing agents which are believed to be generally applicable for use according to the present invention include by way of example fluorocarbons, chlorocarbons, fluorocarbons (CFCs), hydrochlorofluorocarbons (HCFC), hydrofluorocarbons (HFC), hydrohaloolefins (HFO), hydrocarbons, ethers, esters, aldehydes, ketones, acetals, organic acids, atmospheric gases, or other materials that generate gas, for example CO2, through decomposition or chemical reaction, and mixtures of two or more of these.

For those applications in which an HFC coblowing agent is preferred for use, preferred HFCs include HCFC-141b (CH3CCl2F), HCFC-142b (CH3CClF2), HCFC-22 (CHClF2), HFC-245fa (CHF2CH2CF3), HFC-365mfc (CH3CF2CH2CF3), HFC-227ea (CF3CHFCF3), HFC-134a (CH2FCF3), HFC-152a (CH3CHF2) and combinations of these. In highly preferred embodiments in which the co-blowing agent is an HFC, the HFC co-blowing agent is preferably selected from HFC-245fa (CHF2CH2CF3), HFC-365mfc (CH3CF2CH2CF3), HFC-227ea (CF3CHFCF3), HFC-134a (CH2FCF3), HFC-152a (CH3CHF2) and combinations of these.

For those applications in which an HFO co-blowing agent is preferred for use, preferred HFOs include, HFO-1234ze(E) (trans-CF3CH=CHF), HFO-1234ze(Z) (cis-CF3CH=CHF), HFO-1234yf (CF3-CF=CH2) HFO-1233zd(E) (trans-CF3CH=CHCl), HFO-1233zd(Z) (cis-CF3CH=CHCl), HFO-1233xf (CH2=CCl-CF3), HFO-1336mzzm(Z) (cis-CF3CH=CH-CF3), HFO-1336mzzm(E) (trans-CF3CH=CH-CF3), trans-1,2-dichloroethylene and combinations of these. The hydrohaloolefin co-blowing agent preferably comprises at least one halooalkene such as a fluoroalkene or fluorochloroalkene containing from 3 to 4 carbon atoms and at least one carbon-carbon double bond. Preferred hydrohaloolefins non-exclusively include trifluoropropenes, tetrafluoropropenes such as HFO-1234ze(E), pentafluoropropenes such as HFO-1225, chlorotrifloropropenes such as HFO-1233zd(E), HFO-1233xf), chlorodifluoropropenes, chlorotrifluoropropenes, chlorotetrafluoropropenes, hexafluorobutenes such as cis-1,1,1,4,4,4-hexafluorobut-2-ene (HFO-1336mzzm(Z)) and combinations of these. In highly preferred embodiments in which the co-blowing agent is an HFO, the HFO co-blowing agent is preferably selected from HFO-1234ze(E) (trans-CF3CH=CHF), HFO-1233zd(E) (trans-CF3CH=CHCl), HFO-1336mzzm(Z) (cis-CF3CH=CH-CF3), trans-1,2-dichloroethylene, and combinations of these and any and all structural isomers, geometric isomers, or stereoisomers of each of these.

For those applications in which a hydrocarbon co-blowing agent is preferred for use, preferred hydrocarbons are C1 - C5 hydrocarbons, including preferably propane, butane, isobutane, normal pentane, isopentane, cyclopentane, and combinations of these. In highly preferred embodiments in which the co-blowing agent is a hydrocarbon, the hydrocarbon co-blowing agent is preferably selected from butane, isobutane, normal pentane, isopentane, cyclopentane and combinations of these.

For those applications in which an ether co-blowing agent is preferred for use, preferred ethers include dimethyl ether, methylal, ethylal, with dimethyl ether and methylal being especially preferred.

For those applications in which an ester co-blowing agent is preferred for use, preferred esters include methyl formate, methyl acetate and combinations of these.

For those applications in which a ketone co-blowing agent is preferred for use, preferred ketones include acetone.

For those applications in which organic acid co-blowing agent is preferred for use, preferred organic acids include formic acid, acetic acid, polymeric acids, and mixtures of these.

In preferred embodiments, the co-blowing agent when present is selected from one or more of pentafluorobutane; pentafluoropropane; hexafluoropropane; heptafluoropropane; trans-1,2 dichloroethylene; methyl formate; 1-chloro-1,2,2,2-tetrafluoroethane; 1,1-dichloro-1-fluoroethane; 1,1,1,2-tetrafluoroethane; 1,1,2,2-tetrafluoroethane; 1-chloro 1,1-difluoroethane; 1,1,1,3,3-pentafluorobutane; 1,1,1,2,3,3,3-heptafluoropropane; trichlorofluoromethane; dichlorodifluoromethane; 1,1,1,3,3,3-hexafluoropropane; 1,1,1,2,3,3-hexafluoropropane; difluoromethane; difluoroethane; 1,1,1,3,3-pentafluoropropane; 1,1-difluoroethane; isobutane; normal pentane; isopentane; and cyclopentane, methylal (dimethoxymethane), 1-chloro-3,3,3-trifluoropropene (including cis isomers, trans isomers and all combinations thereof), 1,3,3,3-tetrafluoropropene (including cis isomers, trans isomers and all combinations thereof).

The relative amount of any of the above noted additional co-blowing agents, as well as any additional components which may be included in present compositions, can vary widely within the general broad scope of the present invention according to the particular application for the composition, and all such relative amounts are considered to be within the scope hereof.

As is known to those skilled in the art, it is convenient in many applications to provide the components for polyurethane or polyisocyanurate foams in pre-blended formulations. Most typically, the foam formulation is pre-blended into two components. The polyisocyanate and optional isocyanate compatible raw materials comprise the first component, commonly referred to as the "A" component. A polyol or mixture of polyols, surfactant, catalyst, blowing agent, and other isocyanate reactive and non-reactive components comprise the second component, commonly referred to as the "B" component. Accordingly, the foamable compositions, and preferably the polyurethane or polyisocyanurate foamable compositions, are readily prepared by bringing together the A and B side components either by hand mix for small preparations and, preferably, machine mix techniques to form the desired form, including blocks, slabs, panels and other items, spray applied foams, froths, and the like. Optionally, other ingredients such as fire retardants, colorants, auxiliary blowing agents, catalysts, surfactants and other polyols can be added to the mixing head or reaction site. Most conveniently, however, they are all incorporated into one B component.

In general, it is contemplated that the blowing agent of the present invention will be present in the polyol premix composition in an amount of from about 1 wt.% to about 30 wt.%, preferably from about 3 wt.% to about 25 wt.%, and more preferably from about 5 wt.% to about 25 wt.%, by weight of the polyol premix composition. In preferred embodiments, the blowing agent is present in the premix composition in amount of from about 5 wt.% to about 20 wt.%, and more preferably from about 5 wt.% to about 15 wt.%, and even more preferably from about 5 wt.% to about 10 wt.%.

The preferred compositions of the present invention are environmentally acceptable and do not to contribute to the depletion of the earth's stratospheric ozone layer. The blowing agent compositions of the present invention preferably have no substantial ozone depletion potential (ODP), preferably an ODP of not greater than about 0.5 and even more preferably an ODP of not greater than about 0.25, most preferably an ODP of not greater than about 0.1; and/or a global warming potential (GWP) of not greater than about 150, and even more preferably, a GWP of not greater than about 50.

As used herein, ODP is defined in the "Scientific Assessment of Ozone Depletion, 2002," a report of the World Meteorological association, incorporated here by reference. As used herein, GWP is defined relative to that of carbon dioxide and over a 100 year time horizon, and defined in the same reference as for the ODP mentioned above.

Thus, the present invention includes methods, systems and composition in which a blowing agent contains HFO-1336mzzm(Z)and water in the amounts and relative ratios described herein and/or the gas in the cells of the foam contains HFO-1336mzzm(Z) and CO₂ in the amounts and relative ratios described herein, with one or more optional additional compounds which include, but are not limited to, other compounds which also act as blowing agents (hereinafter referred to for convenience but not by way of limitation as co-blowing agents), surfactants, polyols, catalysts, flame retardants, polymer modifiers, colorants, dyes, solubility enhancers, plasticizing agents, fillers, nucleating agents, viscosity reduction agents, vapor pressure modifiers, stabilizers, and the like. In certain preferred embodiments, dispersing agents, cell stabilizers, surfactants and other additives may also be incorporated into the blowing agent compositions of the present invention. Certain surfactants are optionally but preferably added to serve as cell stabilizers. Some representative materials are sold under the names of DC-193, B-8404, and L-5340 which are, generally, polysiloxane polyoxyalkylene block co-polymers such as those disclosed in U.S. Pat. Nos. 2,834,748, 2,917,480, and 2,846,458, each of which is incorporated herein by reference. Other optional additives for the blowing agent mixture may include flame retardants such as tri(2-chloroethyl)phosphate, tri(2-chloropropyl)phosphate, tri(2,3-dibromopropyl)-phosphate, tri(1,3-dichloro-propyl)phosphate, diammonium phosphate, various halogenated aromatic compounds, antimony oxide, aluminum trihydrate, polyvinyl chloride, and the like. With respect to nucleating agents, all known compounds and materials having nucleating functionality are available for use in the present invention.

Of course other compounds and/or components that modulate a particular property of the compositions (such as cost for example) may also be included in the present compositions, and the presence of all such compounds and components is within the broad scope of the invention.

In certain embodiments it is preferred that the blowing agent composition of the present invention and/or or the gas contained in the cells of the foam are nonflammable as measured in accordance with ASTM E-681.

One embodiment of the present invention relates to methods of forming foams, especially panel foams and spray foams, and preferably such foams made from polyurethane and polyisocyanurate. The methods generally comprise providing a blowing agent composition of the present inventions, adding (directly or indirectly) the blowing agent composition to a foamable composition, and reacting the foamable composition under the conditions effective to form a foam or cellular structure, as is well known in the art. Any of the methods well known in the art, such as those described in "Polyurethanes Chemistry and Technology," Volumes I and II, Saunders and Frisch, 1962, John Wiley and Sons, New York, N.Y., which is incorporated herein by reference, may be used or adapted for use in accordance with the foam embodiments of the present invention.

In general, such preferred methods comprise preparing polyurethane or polyisocyanurate foams by combining an isocyanate, a polyol or mixture of polyols, a blowing agent or mixture of blowing agents comprising one or more of the present compositions, and other materials such as catalysts, surfactants, and optionally, flame retardants, colorants, or other additives.

It is convenient in many applications to provide the components for polyurethane or polyisocyanurate foams in pre-blended formulations. Most typically, the foam formulation is pre-blended into two components. The isocyanate and optionally certain surfactants and blowing agents comprise the first component, commonly referred to as the "A" component. The polyol or polyol mixture, surfactant, catalysts, blowing agents, flame retardant, and other isocyanate reactive components comprise the second component, commonly referred to as the "B" component. Accordingly, polyurethane or polyisocyanurate foams are readily prepared by bringing together the A and B side components either by hand mix for small preparations and, preferably, machine mix techniques to form blocks, slabs, laminates, pour-in-place panels and other items, spray applied foams, froths, and the like. Optionally, other ingredients such as fire retardants, colorants, auxiliary blowing agents, and even other polyols can be added as one or more additional streams to the mix head or reaction site. Most preferably, however, they are all incorporated into one B-component as described above.

In certain embodiments, the one or more components capable of forming foam comprise a thermosetting composition capable of forming foam and/or foamable compositions. Examples of thermosetting compositions include polyurethane and polyisocyanurate foam compositions, and also phenolic foam compositions. This reaction and foaming process may be enhanced through the use of various additives such as catalysts and surfactant materials that serve to control and adjust cell size and to stabilize the foam structure during formation. Furthermore, is contemplated that any one or more of the additional components described herein with respect to the blowing agent compositions of the present invention could be incorporated into the foamable composition of the present invention. In such thermosetting foam embodiments, one or more of the present compositions are included as or part of a blowing agent in a foamable composition, or as a part of a two or more part foamable composition as described herein, which preferably includes one or more of the components capable of reacting and/or foaming under the proper conditions to form a foam or cellular structure.

The present methods and systems also include forming a one component foam, preferably polyurethane foam, containing a blowing agent in accordance with the present invention. In certain preferably embodiments, a portion of the blowing agent is contained in the foam forming agent, preferably by being dissolved in a foam forming agent which is liquid at the pressure within the container, a second portion of the blowing agent is present as a separate gas phase. In such systems, the contained/dissolved blowing agent performs, in large part, to cause the expansion of the foam, and the separate gas phase operates to impart propulsive force to the foam forming agent.

Such one component systems are typically and preferably packaged in a container, such as an aerosol type can, and the blowing agent of the present invention thus preferably provides for expansion of the foam and/or the energy to transport the foam/foamable material from the package, and preferably both. In certain embodiments, such systems and methods comprise charging the package with a fully formulated system (preferably isocyanate/polyol system) and incorporating a gaseous blowing agent in accordance with the present invention into the package, preferably an aerosol type can.

It is contemplated also that in certain embodiments it may be desirable to utilize the present compositions when in the supercritical or near supercritical state as a blowing agent.

It is contemplated that all presently known and available methods and systems for forming foam are readily adaptable for use in connection with the present invention. For example, the methods of the present invention generally require incorporating a blowing agent in accordance with the present invention into a foamable or foam forming composition and then foaming the composition, preferably by a step or series of steps which include causing volumetric expansion of the blowing agent in accordance with the present invention.

In general, it is contemplated that the presently used systems and devices for incorporation of blowing agent and for foaming are readily adaptable for use in accordance with the present invention. In fact, it is believed that one advantage of the present invention is the provision of an improved blowing agent which is generally compatible with existing foaming methods and systems.

Thus, it will be appreciated by those skilled in the art that the present invention comprises methods and systems for foaming all types of thermosetting foams. Thus, one aspect of the present invention is the use of the present blowing agents in connection conventional foaming equipment, such as polyurethane foaming equipment, at conventional processing conditions. The present methods therefore include polyol premix type operations, blending type operations, third stream blowing agent addition, and blowing agent addition at the foam head.

It will be appreciated by those skilled in the art, especially in view of the disclosure contained herein, that the order and manner in which the blowing agent of the present invention is formed and/or added to the foamable composition does not generally affect the operability of the present invention. Moreover, the blowing agent can be introduced either directly or as part of a premix, which is then further added to other parts of the foamable composition.

Nevertheless, in certain embodiments, two or more components of the blowing agent are combined in advance and introduced together into the foamable composition, either directly or as part of premix which is then further added to other parts of the foamable composition.

Applicants have found that one advantage of the foams, and particularly thermoset foams such as polyurethane foams, in accordance with the present invention is the ability to achieve, preferably in connection with thermoset foam embodiments, exceptional thermal performance, such as can be measured by the k-factor or lambda, particularly and preferably as measured at a temperature of 10°C. The foams in accordance with the present invention, in certain preferred embodiments, provide one or more exceptional features, characteristics and/or properties, including: thermal insulation efficiency, dimensional stability, compressive strength, aging of thermal insulation properties, all in addition to the low ozone depletion potential and low global warming potential associated with many of the preferred blowing agents of the present invention. In certain highly preferred embodiments, the present invention provides thermoset foam, including such foam formed into foam articles, which exhibit improved thermal conductivity relative to foams made using a combination of HFO-1336mzzm(Z) and water but outside the relative amounts described herein.

### EXAMPLES 1 AND 2 - PANEL FOAM

This example demonstrates the performance of a panel foam formed from a blowing agent consisting of a combination HFO-1336mzzm(Z) and water in relative ratios as indicated herein, to form rigid, thermal insulating panel foam of exceptional and unexpectedly low thermal conductivity.

A generic continuous boardstock polyurethane/polyisocyanurate foam formulation (foam forming mixture) is provided. The foamable composition is formed by first forming a polyol blend consisting of commercial polyol(s), catalyst(s), surfactant(s), and blowing agent comprising HFO-1336mzzm(Z) and water in the amounts indicated in table below. Standard is used for the foam forming process. The blowing agent components can be added individually to the polyol blend or can be pre-blended prior to introduction to the polyol blend, or it is possible that that one or more of the blowing agent components can be added to the polyurethane portion before it is combined with the polyol blend.

This example illustrates that the physical and the thermal conductivity properties of all the resulting foams are suitable for commercial use.

The polyol blends and the polyurethane used to form the foamable composition are described in Table A below:

**TABLE A**

| **EXAMPLE** | P1 (Index = 2.65) | | P2 (Index = 2.65) | |
|---|---|---|---|---|
| **COMPONENT** | Pphp* | Wt% Foamable Composition | Pphp | Wt% Foamable Composition |
| PS 2352, polyester polyol | 100 | 27.58 | 100 | 26.45 |
| **Catalysts** | | | | |
| Dabco K15, potassium octoate in diethylene glycol | 3 | 0.83 | 3 | 0.79 |
| Polycat 5, tertiary amine | 0.6 | 0.17 | 0.6 | 0.16% |
| **Total Catalyst** | 3.6 | 1.00 | 3.6 | 0.95 |
| Surfactant Niax L-6900, non-hydrolysable silicone copolymer | 2.5 | 0.69 | 2.5 | 0.66 |
| TMCP, flame retardant | 15 | 4.14 | 15 | 3.97 |
| **Blowing Agent** | | | | |
| Water | 1.5 | 0.41 | 2 | 0.53 |
| HFO-1336mzzm(Z) | 33.6 | 9.26 | 29 | 7.67 |
| **Total Blowing Agent** | 34.1 | 9.68 | 31 | 8.20 |
| Lupranate M20S, isocyanate | 206.4 | 56.93 | 226.0 | 59.77 |
| **TOTAL** | 362.6 | | 378.1 | |
| | | | | |
| **FOAM PROPERTIES** | | | | |
| lambda, initial, measured @ 10°C, mW/mK | 20.28 | | 20.34 | |
| lambda, aged at 70°C, measured @ 10°C, mW/mK | | 25.34 | | 25.80 |
| Δlambda, mW/mK | | 5.06 | | 5.46 |

| | | | | |
|---|---|---|---|---|
| * Parts by weight per one hundred parts of polyol by weight (aka phpp) | | | | |

Those skilled in the art will appreciate that in Examples 1 and 2 above the total moles of blowing agent in each examples has been maintained to about the same value. In addition, in Examples 2 above the amount of the isocyanate component has been adjusted compared to the amount in Example 1 to achieve the indicated Index for the foam formulation and to thereby make Examples 1 and 2 comparable from a thermal insulating performance standpoint. As can be seen from the results reported above and the comparative examples below, each of the Example 1 and Example 2 formulations produced exceptional and unexpectedly superior foam performance in terms of thermal insulating properties.

The relative amounts of the blowing agent in the formulation are reported in Table B below.

**TABLE B**

| | Example 1 - P1 | | Example 2 - P2 | |
|---|---|---|---|---|
| | Wt% in Blowing Agent | Mole % in Blowing Agent | Wt% in Blowing Agent | Mole % in Blowing Agent |
| Water | 4.3 | 28.9 | 6.4 | 38.6 |
| HFO-1336mzzm(Z) | 95.7 | 71.1 | 93.6 | 61.4 |

Based on the above, the gas contained in the cells of the foam is estimated to have the component concentrations listed in Table Cbelow:

**TABLE C**

| | Mole % in Blowing Agent | |
|---|---|---|
| | Example 1 - | Example 2 - |
| | P1 | P2 |
| CO₂ | 28.9 | 38.6 |
| HFO-1336mzzm(Z) | 71.1 | 61.4 |

### COMPARATIVE EXAMPLES C1, C2 AND C3 - PANEL FOAM

Examples 1 and 2 above are repeated in Examples C1 - C3, expect with relative concentrations of water and HFO-1336mzzm(Z) in the blowing agent being adjusted to values below and above those used in Examples 1 and 2.

The polyol blends and the polyurethane used to form the foamable composition are described in Table D below:

**TABLED**

| **EXAMPLE** | EXAMPLE C1 - CP1 (Index = 2.65) | | EXAMPE C2 CP2 (Index = 2.65) | | EXAMPLE C3 - CP3 (Index =2.65) | |
|---|---|---|---|---|---|---|
| **COMPONENT** | Pphp* | Wt% Foamable Comp | Pphp | Wt% Foamable Comp | Pphp | Wt% Foamable Comp |
| PS 2352, polyester polyol | 100 | 28.8 | 100 | 25.41 | 100 | 24.44% |
| **Catalysts** | | | | | | |
| Dabco K15, potassium octoate in diethylene glycol | 3 | 0.86 | 3 | 0.76 | 3 | 0.73 |
| Polycat 5, tertiary amine | 0.6 | 0.17 | 0.6 | 0.15 | 0.6 | 0.15 |
| **Total Catalyst** | 3.6 | 1.03 | 3.6 | 0.91 | 3.6 | 0.88 |
| Surfactant Niax L-6900, non-hydrolysable silicone copolymer | 2.5 | 0.72 | 2.5 | 0.64 | 2.5 | 0.61 |
| TMCP, flame retardant | 15 | 4.32 | 15 | 3.81 | 15 | 3.67 |
| **Blowing Agent** | | | | | | |
| Water | 1 | 0.29 | 2.5 | 0.64 | 3 | 0.73 |
| HFO-1336mzzm(Z) | 38.1 | 10.99 | 24.5 | 6.21 | 19.9 | 0.86 |
| **Total Blowing Agent** | 39.1 | 11.28 | 27.0 | 6.85 | 22.9 | 5.59 |
| Lupranate M20S, isocyanate | 186.8 | 53.83 | 245.6 | 62.38 | 265.1 | 64.8 |
| **TOTAL** | 347 | 100 | 393.6 | 100 | 409.1 | 100 |
| | | | | | | |

| **FOAM PROPERTIES** | | | | | | |
|---|---|---|---|---|---|---|
| lambda, initial, measured @ 10°C, mW/mK | 20.52 | | 20.82 | | 21.51 | |
| lambda, aged at 70°C, measured | 25.88 | | 26.26 | | 27.36 | |
| @10°C, mW/mK | | | | | | |
| Δlambda, mW/mK | | 5.36 | 5.44 | | 5.85 | |

| | | | | | | |
|---|---|---|---|---|---|---|
| * Parts by weight per one hundred parts of polyol by weight (aka phpp) | | | | | | |

The relative amounts of the blowing agent in the formulation are reported in Table E below.

**TABLE E**

| | Example C1 - P3 | | Example C2 - P4 | | Example C3 - P52 | |
|---|---|---|---|---|---|---|
| | Wt% in Blowing Agent | Mole % in Blowing Agent | Wt% in Blowing Agent | Mole % in Blowing Agent | Wt% in Blowing Agent | Mole % in Blowing Agent |
| Water | 2.56 | 19.3 | 9.27 | 48.18 | 13.1 | 57.9 |
| HFO-1336mzzm(Z) | 97.44 | 80.7 | 90.73 | 51.82 | 86.9 | 42.1 |

Based on the above, the gas contained in the cells of the foam is estimated to have the component concentrations listed in Table F below:

**TABLE F**

| | Mole % in Blowing Agent | | |
|---|---|---|---|
| | Example C1 -P3 | Example C2 - P4 | Example C3 - P5 |
| CO₂ | 19.3 | 48.2 | 57.9 |
| HFO-1336mzzm(Z) | 80.7 | 51.82 | 42.1 |

Those skilled in the art will appreciate that in Examples C1 - C3 above the total moles of blowing agent in each example has been maintained to about the same value. In addition, the amount of the isocyanate component has been adjusted to achieve the same Index as in Examples 1 and 2, and to thereby make these examples comparable from a thermal insulating performance standpoint.

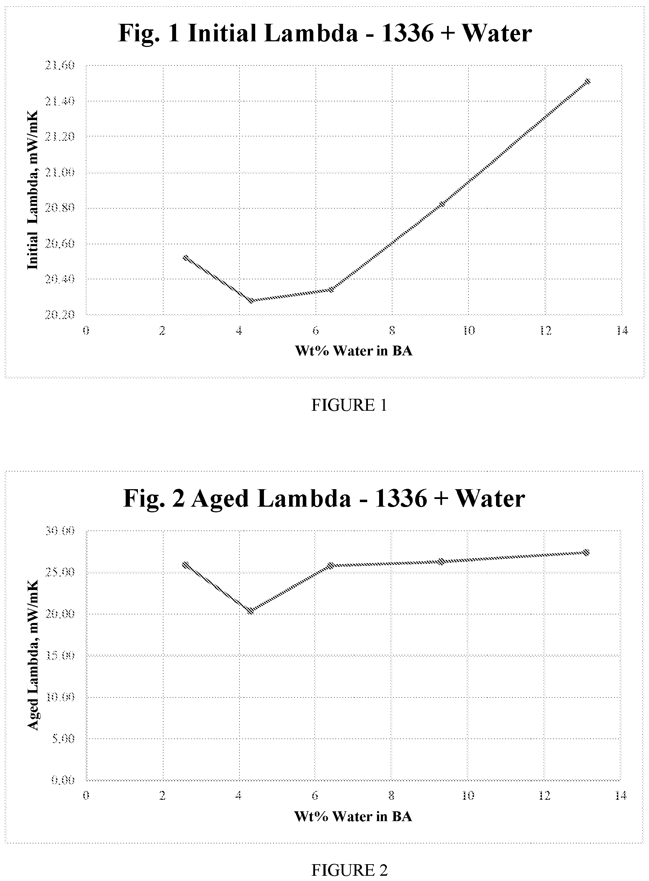

As can be seen from the results reported above, in each case of the comparative formulations, the thermal insulation performance as measured by initial lambda, and by aged lambda in the case of a highly preferred embodiment in which the 1336/water weight ratio is from about 96:4 to about 95:5, is significantly inferior to the performance of foams formed according to Example 1 and Example 2 according to the preferred aspects of the present invention. This result, which is a significant and difficult to achieve performance advantage that is unexpected, is illustrated in Figures 1 and 2 attached.

Another unexpected but highly desirable result according to the practice of preferred aspects of the present invention is the existence of a significant depression in the "Delta (Δ) Lambda" according to the preferred 1336/water ratio and/or the 1336/CO₂ ratio. As used herein, the term "Delta Lambda" refers to the difference in thermal conductivity of a foam as measured at 10°C but after the foam has been aged for 21 days at a temperature of 70°C compared to the initial thermal conductivity of the foam as measured at 10°C. Thus, the Delta Lambda of a foam measures the ability of a foam to resist degradation of the thermal insulating value as the foam is aged, with lower values indicating better resistance to degradation of thermal insulating value (lambda, k-value).

### SPRAY FOAM EXAMPLES

### EXAMPLES 3 and 4

Spray foams using HFO-1336mzzm(Z) and water as the blowing agent according to the present invention were prepared for Examples 3 and 4 as follows: polyol premix compositions are formed with the relative amounts HFO-1336mzzm(Z) and water as indicated herein, with the total amount of blowing agent on a molar basis in the polyol premix being maintained at 0.39 moles per hundred parts by weight of polyol for each example. The foams were prepared by bringing the polyol premix (at a temperature of 60C) together with the isocyanate (at a temperature of 70C) with a 7 second mix time in an 8 pint can, with a total batch size of 300 grams. The batch is poured into an 8" x 8" cake box. The foam sample produced represents a spray foam and is cut into four layers from top to bottom, with the two inner layers being used for k-factor measurements. The polyol blends and the polyurethane used to form the foamable composition are described in Table G below:

**TABLE G**

| **EXAMPLE** | 3 - (Index = 110) | | 4 - (Index = 110) | |
|---|---|---|---|---|
| **COMPONENT** | Pphp* | Wt% Foamable Composition | Pphp | Wt% Foamable Composition |
| Voranol 470X, polyether polyol | 40 | 14.23 | 40 | 15.10 |
| Terate 4020, polyester polyol | 45 | 16.01 | 45 | 16.99 |
| Voranol, 360, polyether polyol | 15 | 5.34 | 15 | 5.66 |
| **Catalysts** | | | | |
| Polycat 8, amine | 3 | 1.07 | 3 | 1.13 |
| **Total Catalyst** | 3 | 1.07 | 3 | 1.13 |
| Niax L-6100, surfactant | 0.74 | 0.26 | 0.77 | 0.29 |
| tris(2-propyl)phosphate, flame retardant | 10 | 3.56 | 10 | 3.78 |
| **Blowing Agent** | | | | |
| Water | 0.5 | 0.18 | 1.5 | 0.57 |
| E-1336mzzm | 26.28 | 9.35 | 17.17 | 6.48 |
| **Total Blowing Agent** | 26.78 | 9.53 | 18.67 | 7.05 |
| Lupranate M20S, isocyanate | 140.5 | 50.0 | 132.42 | 50.00 |
| **TOTAL** | 289.07 | 100 | 264.86 | 100 |
| | | | | |

| **FOAMING PROPERTIES** | | | | |
|---|---|---|---|---|
| Cream Time, sec | 10 | | 9 | |
| Gel Time, sec | 20 | | 18 | |
| Tack Free Time, sec | 24 | | 23 | |
| | | | | |

| **FOAM PROPERTIES** | | | | |
|---|---|---|---|---|
| Density, pounds per cubic foot (pcf) | 2.37 | | 2.20 | |
| lambda, initial, measured @ 10°C, mW/mK | 18.09 | | 19.55 | |
| lambda, aged at 70°C, measured @ 10°C, mW/mK | 22.83 | | 23.89 | |
| Δ lambda, mW/mK | 4.74 | | 4.34 | |

| | | | | |
|---|---|---|---|---|
| * Parts by weight per one hundred parts of polyol by weight (aka phpp) | | | | |

Those skilled in the art will appreciate that in Examples 3 and 4 above the total moles of blowing agent in each examples has been maintained to about the same value. In addition, in Example 4 above the amount of the isocyanate component has been adjusted compared to the amount in Example 3 to achieve the indicated Index for the foam formulation and to thereby make Examples 3 and 4 comparable from a thermal insulating performance standpoint. As can be seen from the results reported above and in the comparative examples below, each of the Example 3 and Example 4 formulations produced exceptional and unexpectedly superior foam performance in terms of thermal insulating properties.

The relative amounts of the blowing agent in the formulation are reported in Table H below.

**TABLE H**

| | Example 3 | | Example 4 | |
|---|---|---|---|---|
| | Wt% in Blowing Agent | Mole % in Blowing Agent | Wt% in Blowing Agent | Mole % in Blowing Agent |
| Water | 1.87 | 14.77 | 8.03 | 44.32 |
| HFO-1336mzzm(Z) | 98.13 | 85.23 | 91.97 | 55.68 |

Based on the above, the gas contained in the cells of the foam is estimated to have the component concentrations listed in Table I below:

**TABLE I**

| | Mole % in Blowing Agent | | | |
|---|---|---|---|---|
| | Example 3 | | Example 4 | |
| CO2 | 14.77 | | 44.32 | |
| HFO-1336mzzm(Z) | 85.23 | | 55.68 | |

### COMPARATIVE EXAMPLES C4, C5 AND C6 - SPRAY FOAM

Examples 3 and 4 above are repeated in comparative examples C4 - C6, expect with relative concentrations of water and HFO-1336mzzm(Z) in the blowing agent being adjusted to values below and above those used in Examples 3 and 4.

The polyol blends and the polyurethane used to form the foamable composition are described in Table J below:

**TABLE J**

| **EXAMPLE** | COMPARATIVE EXAMPE 4 (Index = 110) | | COMPARATIVE EXAMPE 5 (Index = 110) | | COMPARATIVE EXAMPE 6 (Index =110) | |
|---|---|---|---|---|---|---|
| **COMPONENT** | Pphp* | Wt% Foamable Composition | Pphp | Wt% Foamable Composition | Pphp | Wt% Foamable Composition |
| Voranol 470X, polyether polyol | 40 | 13.8 | 40 | 15.6 | 40 | 16.3 |
| Terate 4020, polyester polyol | 45 | 15.6 | 45 | 17.5 | 45 | 18.7 |
| Voranol, 360, polyether polyol | 15 | 5.2 | 15 | 5.8 | 15 | 6.2 |
| | | | | | | |
| **Catalysts** | | | | | | |
| Polycat 8, amine | 3 | 1.0 | 3 | 1.2 | 3 | 1.2 |
| | | | | | | |
| Total **Catalyst** | 3 | 1.0 | 3 | 1.2 | 3.0 | 1.2 |
| Surfactant, Niax L-6100 | 0.72 | 0.2 | 0.78 | 0.3 | 0.72 | 0.3 |
| AntiBlaze, flame retardant | 10 | 3.5 | 10 | 3.9 | 10 | 4.1 |
| **Blowing Agent** | | | | | | |
| Water | 0 | 0 | 2 | 7.8 | 3 | 1.2 |
| HFO-136mzzm(Z) | 30.81 | 10.7 | 12.62 | 4.9 | 3.5 | 1.5 |
| **Total Blowing Agent** | 30.81 | 10.7 | 14.62 | 5.7 | | 2.7 |
| Lupranate M20S, isocyanate | 144.54 | 50.0 | 128.39 | 50.0 | 120.33 | 50.0 |
| **TOTAL** | 289.07 | 100 | 256.79 | 100 | 120.33 | 100% |
| | | | | | | |
| **FOAMING PROPERTIES** | | | | | | |
| Cream Time, sec | 10 | | 10 | | 10 | |
| Gel Time, sec | 20 | | 18 | | 17 | |
| Tack Free Time, sec | 28 | | 25 | | 22 | |
| | | | | | | |
| **FOAM PROPERTIES** | | | | | | |
| Density, pounds per cubic foot (pcf) | 2.64 | | 1.84 | | 2.13 | |
| lambda, initial, measured @ 10°C, mW/mK | 19.03 | | 19.9 | | 22.27 | |
| lambda, aged at 70°C, measured @10°C, mW/mK | | NA | 24.18 | | 28.29 | |
| Δlambda, mW/mK | | NA | 4.28 | | 6.02 | |

| | | | | | | |
|---|---|---|---|---|---|---|
| * Parts by weight per one hundred parts of polyol by weight (aka phpp) | | | | | | |

Those skilled in the art will appreciate that in Examples C4 - C6 the total moles of blowing agent in each example has been maintained to about the same value. In addition, the amount of the isocyanate component has been adjusted to achieve the same Index as in Examples 3 and 4, and to thereby make these examples comparable from a thermal insulating performance standpoint.

The polyol blends and the polyurethane used to form the foamable composition are described in Table K below:

**TABLE K**

| | Example C4 | | Example C5 | | Example C6 | |
|---|---|---|---|---|---|---|
| | Wt% in Blowing Agent | Mole % in Blowing Agent | Wt% in Blowing Agent | Mole % in Blowing Agent | Wt% in Blowing Agent | Mole % in Blowing Agent |
| Water | 0 | 0 | 13.68 | 59.08 | 46.07% | 88.62% |
| HFO-1336mzzm(Z) | 100 | 100 | 86.32 | 40.92 | 53.93% | 11.38% |

Based on the above, the gas contained in the cells of the foam is estimated to have the component concentrations listed in Table L below:

**TABLE L**

| | Mole % in Blowing Agent | | |
|---|---|---|---|
| | Example C4 | Example C5 | Example C6 |
| CO₂ | 0 | 59.08 | 88.62 |
| HFO-1336mzzm(Z) | 100 | 40.92 | 11.38 |

Those skilled in the art will appreciate that in Examples C4 - C6 above the total moles of blowing agent in each example has been maintained to about the same value. In addition, the amount of the isocyanate component has been adjusted to achieve the same Index as in Examples 3 and 4, and to thereby make these examples comparable from a thermal insulating performance standpoint.

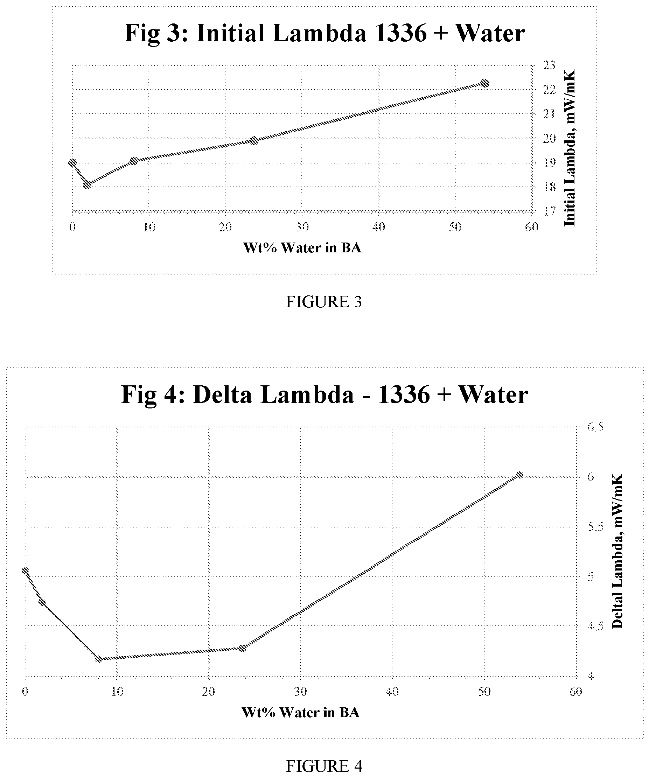

As can be seen from the results reported above, in each case of the comparative formulations, the thermal insulation performance as measured by initial k-value is significantly inferior to the initial k-value performance of foams formed according to Example 3 and Example 4, and most especially Example 3, which are in accordance with the preferred aspects of the present invention. This result, which is a significant and difficult to achieve performance advantage that is unexpected, as illustrated in Figure 3 attached.

Another unexpected but highly desirable result according to the practice of preferred aspects of the present invention is the existence of a significant depression in the "Delta (Δ) Lambda" according to the preferred 1336/water ratio and/or the 1336/CO2 ratio. As used herein, the term "Delta Lambda" refers to the difference in thermal conductivity of a foam as measured at 10C but after the foam has been aged for 21 days at a temperature of 70C compared to the initial thermal conductivity of the foam as measured at 10C. Thus, the Delta Lambda of a foam measures the ability of a foam to resist degradation of the thermal insulating value as the foam is aged, with lower values indicating better resistance to degradation of thermal insulating value (k-value). This unexpected and important result is illustrated by the plot of the data from Examples 3, 4, C4, C5 and C6 showing the wt% water in the blowing agent against the Delta Lambda in Figure 4 attached.

### EXAMPLES 5 AND 6 AND COMPARATIVE EXAMPLES C7, C8 AND C9

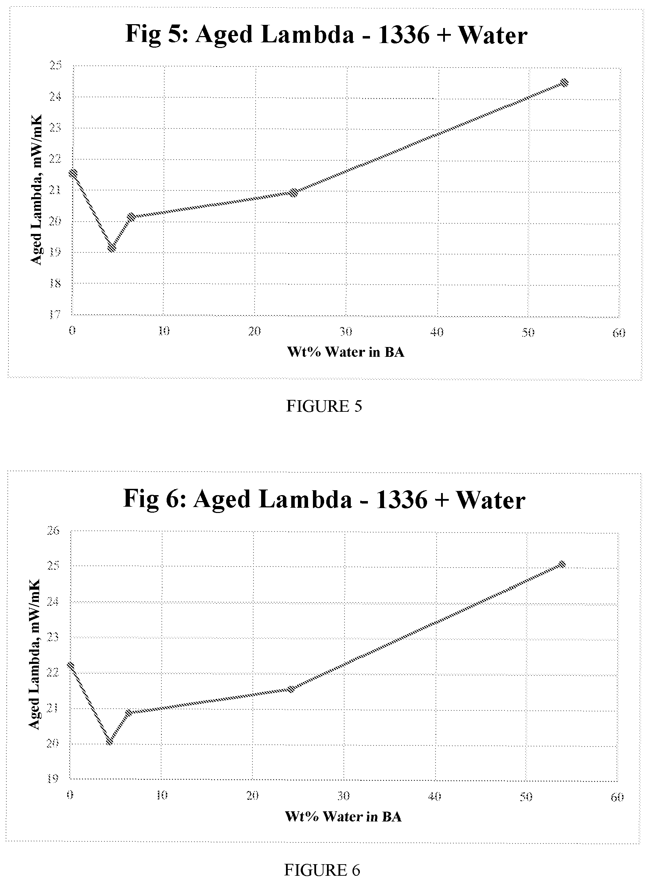

Examples 3 and 4 and Comparative Examples C4, C5 and C6 are repeated as Examples 5 and 6 and Comparative Examples C7, C8 and C9, except that the spray foam that is formed is aged at room temperature for 28 days prior to testing to determine k-value at 10C. The results from the initial testing and the aged testing are provided in Table M below and Figure 5 attached.

**TABLE M- AGING AT ROOM TEMPERATURE**

| ***Formulation*** | ***S3*** | ***S1*** | ***S2*** | ***S4*** | ***S5*** |
|---|---|---|---|---|---|
| ***Water Content, php*** | ***0*** | ***0.5*** | ***1*** | ***2*** | ***3*** |
| Density, pcf | 2.52 | 2.29 | 2.29 | 1.78 | 2.03 |
| lambda, initial, mW/mK | 19.66 | 18.00 | 18.79 | 20.06 | 22.69 |
| lambda, 28 Day , mW/mK | 21.54 | 19.70 | 20.83 | 21.79 | 25.81 |
| Δ lambda, mW/mK | 1.88 | 1.70 | 2.04 | 1.73 | 3.12 |

As can be seen from the results reported above, in each case of the comparative formulations, the thermal insulation performance as measured by 28 day aged k-value (with aging at room temperature) is significantly inferior to the initial k-value performance of foams formed according to Example 5 and Example 6, and most especially Example 6, which are in accordance with the preferred aspects of the present invention. This result, which is a significant and difficult to achieve performance advantage that is unexpected, as illustrated in Figure 5 attached.

### EXAMPLES 7 AND 8 AND COMPARATIVE EXAMPLES C10, C11 AND C12

Examples 3 and 5 and Comparative Examples C7, C8 and C9 are repeated (as Examples 7 and 8 and Comparative Examples C10, C11 and C12) except that the spray foam is tested to determine k-value at 40F (5C). The results from the initial testing and the aged testing are provided in Table N below and in Figure 6.

**TABLE K - AGING AT FOR 28 DAYS - MEASURED AT 40F**

| ***Formulation*** | ***S3*** | ***S1*** | ***S2*** | ***S4*** | ***S5*** |
|---|---|---|---|---|---|
| ***Water Content, php*** | ***0*** | ***0.5*** | ***1*** | ***2*** | ***3*** |
| Density, pcf | 2.52 | 2.29 | 2.29 | 1.78 | 2.03 |
| lambda, initial, mW/mK | 20.12 | 18.12 | 18.60 | 19.70 | 22.03 |
| lambda, 28 Day , mW/mK | 22.21 | 20.06 | 20.87 | 21.57 | 25.11 |
| Δ lambda, mW/mK | 2.09 | 1.94 | 2.27 | 1.87 | 3.08 |

As can be seen from the results reported above, in each case of the comparative formulations, the thermal insulation performance as measured by k-value at 40F with 28 day aging at room temperature is significantly inferior to the aged k-value performance of foams formed according to Example 7 and Example 8, and most especially Example 8, which are in accordance with the preferred aspects of the present invention. This result is a significant and difficult to achieve performance advantage that is unexpected.

## Claims

1. A method of making thermoset, thermal insulating foam, said foam being selected from panel and spray foams, said method comprising:
(a) providing a foamable composition comprising a thermosetting foam forming component and blowing agent for forming closed cells in the foam, wherein the blowing agent comprises: cis-1,1,1,4,4,4-hexafluoro-2-butene (HFO-1336mzzm(Z)) and water, wherein (i) said HFO-1336mzzm(Z) and said water in the blowing agent together comprise at least about 50% by weight of the total of all components in the blowing agent; and (ii) the weight ratio of HFO-1336mzzm(Z) to water in the blowing agent is from about 90:10 to less than 98:2, and
(b) forming panel foam or spray foam from said provided foamable composition.

2. The method of claim 1 wherein said thermosetting foam components comprise a polyurethane foam forming component.

3. The method of claim 1 or claim 2 wherein said HFO-1336mzzm(Z) and said water in the blowing agent together comprise at least about 70% by weight of the foam blowing agent.

4. The method of claim 1 or claim 2 wherein said HFO-1336mzzm(Z) and said water in the blowing agent together comprise about 100% by weight of the foam blowing agent.

5. The method of any one of claims 1 to 4 wherein said HFO-1336mzzm(Z) and said water in the blowing agent are present in a weight ratio of from about 90:10 to about 97:3.

6. The method of any one of claims 1 to 4 wherein said HFO-1336mzzm(Z) and said water in the blowing agent are present in a weight ratio of from about 96:4 to about 97:3.

7. A thermal insulating foam comprising a polyurethane polymer matrix having closed cells in said matrix and gas in said cells, said gas comprising HFO-1336mzzm(Z) and CO2, with said HFO-1336mzzm(Z) and said CO2 together comprising at least about 75% by weight of the components in said gas, wherein the mole ratio of said HFO-1336mzzm(Z) to said CO2 in said gas is from about 50:50 to about 80:20 and wherein said foam has an initial k-factor as measured at 10C of not greater than 20 mW/mK.

8. The thermal insulating foam of claim 7 wherein said foam has a Delta Lambda of not less than about 4.5 mW/mK.

9. A panel foam comprising the thermal insulating foam of claim 7 or claim 8.

10. A spray foam comprising the thermal insulating foam of claim 7 or claim 8.

11. A premix composition for forming a thermoset, thermal insulating panel foam or spray foam, said premix composition comprising: (a) at least one polyol; (b) catalyst; and (c) blowing agent, said blowing agent comprising: cis-1,1,1,4,4,4-hexafluoro-2-butene (HFO-1336mzzm(Z)) and water, wherein (i) said HFO-1336mzzm(Z) and said water in the blowing agent together comprise at least about 50% by weight of the total of all components in the blowing agent; and (ii) the weight ratio of HFO-1336mzzm(Z) to water in the blowing agent is from about 90:10 to less than 98:2.

12. The premix composition of claim 11 comprising from about 5 wt% to about 25 wt% of said blowing agent.

13. The premix composition of claim 11 comprising from about 5 wt% to about 15 wt% of said blowing agent.

14. The premix composition of claim 11 comprising from about 5 wt% to about 10 wt% of said blowing agent.

15. The premix composition of any one of claims 11 to 14 wherein said HFO-1336mzzm(Z) and said water in the blowing agent together comprise at least about 70% by weight of the foam blowing agent.

16. The premix composition of any one of claims 11 to 15 wherein said HFO-1336mzzm(Z) and said water in the blowing agent are present in a weight ratio of from about 90:10 to about 97:3.

17. The premix composition of any one of claims 11 to 15 wherein said HFO-1336mzzm(Z) and said water in the blowing agent are present in a weight ratio of from about 96:4 to about 97:3.

18. The premix composition of any one of claims 11 to 17 wherein said blowing agent consists essentially of HFO-1336mzzm(Z) and said water.
